(19) Europäisches Patentamt
European Patent Office
Office européen des brevets

(11) **EP 4 067 107 B1**

(12) **EUROPEAN PATENT SPECIFICATION**

(45) Date of publication and mention
of the grant of the patent:
**08.04.2026 Bulletin 2026/15**

(21) Application number: **21763925.1**

(22) Date of filing: **02.03.2021**

(51) International Patent Classification (IPC):
*B42D 25/328* (2014.01)    *G02B 5/18* (2006.01)
*G07D 7/00* (2016.01)    *G02B 30/10* (2020.01)
*B42D 25/00* (2014.01)    *G02B 5/32* (2006.01)
*G07D 7/12* (2016.01)    *B42D 25/324* (2014.01)
*B42D 25/425* (2014.01)    *G02B 3/00* (2006.01)
*G02B 3/08* (2006.01)

(52) Cooperative Patent Classification (CPC):
**G07D 7/0032; B42D 25/324; B42D 25/328;
B42D 25/425; G02B 5/32; G02B 30/10; G07D 7/12;**
G02B 3/0006; G02B 3/08

(86) International application number:
**PCT/RU2021/000090**

(87) International publication number:
**WO 2021/177858 (10.09.2021 Gazette 2021/36)**

(54) **METHOD FOR SYNTHESIZING PLANAR DIFFRACTIVE OPTICAL ELEMENTS**

VERFAHREN ZUM SYNTHETISIEREN PLANARER DIFFRAKTIVER OPTISCHER ELEMENTE

PROCÉDÉ DE SYNTHÈSE D'ÉLÉMENTS OPTIQUES DE DIFFRACTION PLANS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.03.2020 EA 202000167**

(43) Date of publication of application:
**05.10.2022 Bulletin 2022/40**

(73) Proprietor: **Computer Holography Centre Ltd
Zelenograd, Moscow 124460 (RU)**

(72) Inventors:
• **GONCHARSKIY, Anton Alexandrovich
Moscow 117321 (RU)**

• **GONCHARSKIY, Alexander Vladimirovich
Moscow 117321 (RU)**
• **DURLEVICH, Svyatoslav Radomirovich
Moscow 119571 (RU)**
• **MELNIK, Dmitry Vladimirovich
Moscow 109125 (RU)**

(74) Representative: **Spengler, Robert
Potthast & Spengler
Patentanwälte PartG mbB
Magirus-Deutz-Straße 12
89077 Ulm (DE)**

(56) References cited:
**EA-B1- 026 552**     **EA-B1- 034 156
US-A1- 2018 015 771**

## Description

The claimed micro-optical system for the formation of 3D images is an optical security technology represented by so-called security labels used to authenticate banknotes, documents, passports, IDs, plastic cards, securities, and brands. Optical technologies enable visual and expert authentication of security optical elements (Optical Document Security, Third Edition, Rudolf L. Van Renesse. Artech House, Boston, London, 2005). The most important task is the formation of visual security features. Various techniques have been developed to synthesize optical elements to form 2D visual security features (Optical Document Security, Third Edition, Rudolf L. Van Renesse. Artech House, Boston, London, 2005).

An example of a flat optical element forming a 2D image with motion effect is described in patent EA034156B1. Micro-optical system for the formation of visual images, represented by a flat single-layer reflective diffractive optical phase element that forms the image of letters, digits, or symbols with kinematic effects of motion, distinguished in that the area of the optical element is partitioned into elementary areas with the size no greater 250 $\mu$m. In the center of each elementary region there are identical Fresnel lenses. The phase function is computed in each elementary area as a product of Fresnel lens phase function and a binary function. The binary function is the periodic extension of the binary 2D image of a letter, a digit, or a symbol with the period different from the lens raster period. The resulting kinematic effect consists of the movement of 2D letters or digits when the optical element is tilted.

The synthesis of optical security elements for the formation of 3D images is a more challenging task of greater current importance. Optical elements for the formation of 3D images were first used to protect VISA plastic cards against counterfeiting back in 1984. Thus far, all VISA plastic cards bear a 3D image of a dove on their hologram, which can hardly be called a security feature now.

The micro-optical system "Optical variable security device" (patent US20070268536A1) is the closest technical solution to the claimed invention in terms of the set of features (prototype). The above patent offers a method of analog optical recording of optical security elements. To implement the method, a 3D object must be created that is illuminated by coherent diffuse light. An interferogram of the reference and scattered beams is recorded on a holographic photographic plate. The prototype thus uses analog optical technology to record the original optical security element. Analog optical hologram recording technology is widely used. For example, the aforementioned hologram on the VISA card is also recorded using optical technology. Equipment used for optical recording is relatively inexpensive and the main disadvantage of optically recorded holographic elements is their poor protection against counterfeit. The 3D image in the prototype is formed in the first order of diffraction. In the claimed micro-optical system the 3D image is formed in the zero order of diffraction. The claimed micro-optical system is not analog, but computer-synthesized.

The purpose of the present invention is to improve the security function of the tools used to authenticate banknotes, documents, passports, IDs, plastic cards, securities, and brands, and to reduce the availability of the technology employed for the production of these security features. This is achieved by developing micro-optical systems in the form of a single-layer diffractive optical element serving to create a 3D-image in the zero order of diffraction. The object has a wireframe structure and consists of vertices connected by rectilinear or curvilinear edges. Wireframe 3D objects are ideal for visual recognition because these images are contrastive and simple enough for three-dimensional identification. To synthesize an optical element, a 3D computer model is developed.

Unlike the prototype, the claimed invention uses computer-aided synthesis technology for optical security elements. Multigrade Fresnel lens fragments are used to form 3D images fragments. Optical security element is a flat phase element whose microrelief forms a 3D-image when the optical element is illuminated by white light. The accuracy of the microrelief production is 10 nm in terms of depth. The microrelief is produced using electron-beam technology, which is knowledge intensive and by no means widely available.

According to claim 1 of the invention, a method is described for the synthesis of a micro-optical system in the form of a flat reflective diffractive optical phase element used to form visual 3D wireframe images. A 3D object is defined by its vertices $V_p$, $p=1...P$, and edges $R_q$, $q=1...Q$. To compute the phase function of a flat optical element, the region G of the optical element is subdivided into elementary regions $G_{ij}$, $i=1...I$, $j=1...J$, with the size smaller than 200 microns, and in each of them an axial parabolic Fresnel lens with phase function $\Phi(x,y)=C(x^2+y^2)$ is placed, where $C$ is a given parameter. For each Fresnel lens the spatial position of its focus $f_{ij}$ is computed and each edge $R_q$ is subdivided into an integer number of parts K, and a sphere $S_{q,k}$ of diameter d is placed into each partition point so that the neighboring spheres intersect by more than half of their diameters. For each elementary region $G_{ij}$ the projection $\overline{S}_{q,k}(i,j)$ of the sphere $S_{q,k}$ through the focus $f_{ij}$ is constructed, and the union of all projections of the spheres for all edges over subscripts $q$ and $k$ defines the region $\overline{G}_{ij} = U_{q,k}\,\overline{S}_{q,k}(i,j)$ that belongs to the elementary region $G_{ij}$ where the phase function of the optical element is set equal to zero. Thus, the phase function at each point $(x,y)$ of the elementary region $G_{ij}$ is equal to zero at the points of the regions $\overline{G}_{ij}$ and is equal to $0.5 \cdot C(x^2+y^2)$ at the points of the region $G_{ij}\backslash\overline{G}_{ij}$, $i=1...I$, $j=1...J$. At each point $(x,y)$ of region G the microrelief $h(x,y)=0.5 \cdot \Phi(x,y)$ is computed so that at diffraction angles smaller than 60° the observer sees a three-dimensional wireframe image consisting of dark edges on light background.

According to claim 2 a method is described for the synthesis of a micro-optical system in the form of a flat reflective diffractive optical phase element used to form visual 3D wireframe images. A 3D object is defined by its vertices $V_p$, $p=1...P$, and edges $R_q$, $q=1...Q$. To compute the phase function of a flat optical element, the region G of the optical element is subdivided into elementary regions $G_{ij}$, $i=1...I$, $j=1...J$, with the size smaller than 200 microns, and in each of them an axial parabolic Fresnel lens with phase function $\Phi(x,y)=C(x^2+y^2)$ is placed, where $C$ is a given parameter. For each Fresnel lens the spatial position of its focus $f_{ij}$ is computed and each edge $R_q$ is subdivided into an integer number of parts K, and a sphere $S_{q,k}$ of diameter $d$ is placed into each partition point so that the neighboring spheres intersect by more than half of their diameters. For each elementary region $\overline{G}_{ij}$ the projection $S_{q,k}(i,j)$ of the sphere $S_{q,k}$ through the focus $f_{ij}$ is constructed, and the union of all projections of the spheres for all edges over subscripts $q$ and $k$ defines the region $\overline{G}_{ij} = U_{q,k} \, \overline{S}_{q,k}(i,j)$ that belongs to the elementary region $G_{ij}$ . The phase function at each point $(x,y)$ of the elementary region $G_{ij}$ is equal to zero at the points of the regions $G_{ij}\backslash\overline{G}_{ij}$ and is equal to $0.5\cdot C(x^2+y^2)$ at the points of the region $\overline{G}_{ij}$, $i=1...I$, $j=1...J$. At each point $(x,y)$ of region G the microrelief $h(x,y)=0.5\cdot\Phi(x,y)$ is computed so that at diffraction angles smaller than 60° the observer sees a three-dimensional wireframe image consisting of light edges against dark background.

According to claim 3, a method is described for the synthesis of a micro-optical system in the form of a flat reflective diffractive optical phase element for creating the effect of the alternation of two wireframe 3D images defined by the vertices $V_p^{(1)}$ , $p=1...P^{(1)}$ and edges $R_q^{(1)}$ , $q=1...Q^{(1)}$, and, respectively, by the vertices $V_p^{(2)}$ , $p=1...P^{(2)}$ and edges $R_q^{(2)}$ , $q=1...Q^{(2)}$. To compute the phase function of a flat optical element region $G$ of the optical element is partitioned into elementary regions $G_{ij}$, $i=1...I$, $j=1...J$ smaller than 200 microns. Each elementary region $G_{ij}$ is subdivided into two elementary regions $G_{ij}^{(1)}$ and $G_{ij}^{(2)}$ responsible for generating different 3D images. In the elementary regions $G_{ij}^{(1)}$ and $G_{ij}^{(2)}$ parabolic Fresnel lenses are placed with phase functions

$$\Phi_{(x,y)}^{(1)} = C^{(1)}(x^2 + y^2) \qquad \text{and}$$

$$\Phi_{(x,y)}^{(2)} = C^{(2)}(x^2 + y^2) \, \Phi(x,y)=C(x^2+y^2) \quad ,$$

where $C^{(1)}$ and $C^{(2)}$ are given parameters. For each Fresnel lens the spatial position of their foci $f_{ij}^{(1)}$ and

$f_{ij}^{(2)}$ are computed. Each edge $R_q^{(1)}$ and $R_q^{(2)}$ is partitioned into an integer number of parts K, and at each partition point the spheres $S_{q,k}^{(1)}$ and $S_{q,k}^{(2)}$ with diameter d are placed so that the adjacent spheres intersect by more than half of their diameters. For each elementary region $G_{ij}^{(1)}$ and $G_{ij}^{(2)}$ projections $\overline{S}_{q,k}^{(1)}(i,j)$ of sphere $S_{q,k}^{(1)}$ through the focus $f_{ij}^{(1)}$ and projections $\overline{S}_{q,k}^{(2)}(i,j)$ of sphere $S_{q,k}^{(2)}$ through the focus $f_{ij}^{(2)}$ are constructed. The union of all sphere projections for all edges over subscripts $q$ and $k$ defines the region $\overline{G}_{ij}^{(1)} = U_{q,k} \, \overline{S}_{q,k}^{(1)}(i,j)$ that belongs to elementary region $G_{ij}^{(1)}$ , and region $\overline{G}_{ij}^{(2)} = U_{q,k} \, \overline{S}_{q,k}^{(2)}(i,j)$ that belongs to elementary region $G_{ij}^{(2)}$ where the phase function of the optical element is set equal to zero. Thus at each point $(x,y)$ or region $G_{ij}^{(1)}$ the phase function that forms the first 3D image is equal to zero at the points of regions $\overline{G}_{ij}^{(1)}$ and is equal to $0.5\cdot C(x^2+y^2)$ at the points of region $G_{ij}^{(1)}\backslash\overline{G}_{ij}^{(1)}$ , $i=1...I$, $j=1...J$, respectively, and at each point $(x,y)$ of region $G_{ij}^{(2)}$ the phase function that forms the second 3D image is equal to zero at the points of regions $\overline{G}_{ij}^{(2)}$ and is equal to $0.5\cdot C(x^2+y^2)$ at the points of region $G_{ij}^{(2)}\backslash\overline{G}_{ij}^{(2)}$ , $i=1...I$, $j=1...J$. In this case at diffraction angles ranging from 0° to +30° the observer sees one 3D wireframe image, and at diffraction angles ranging from 0° to -30° the observer sees another 3D wireframe image, and both images consist of dark edges on a light background.

According to claim 4 a method is described for the synthesis of a micro-optical systems according to claims 1-3 of the invention formula distinguished in that each of the regions where the phase function $\Phi(x,y)=0$ is partially or completely filled with diffraction gratings of various periods and different orientations, which, when the micro-optical system is illuminated by a source of white light, form a 2D color image seen by the observer at diffraction angles greater than 60°.

Another variant of image formation at large diffraction angles is also possible. In each elementary

region $G_{ij}$ elementary region $G_{ij}^{3D}$ is selected that is responsible for the formation of 3D images at diffraction angles smaller than 60°, and elementary region $G_{ij}^{2D}$ is selected that is resposible for the formation of the 2D image at large diffraction angles. The area of elementary region $G_{ij}^{2D}$ does not exceed 30% of that of region $G_{ij}$.

The formation of microrelief in elementary region $G_{ij}^{3D}$ proceeds in full accordance with claims 1-3 of the invention formula. Elementary region $G_{ij}^{2D}$ is partially or fully filled with fragments of diffraction gratings of various periods and different orientations.

Central to the invention is the use of an array of Fresnel lenses. Augustin Fresnel introduced flat lenses into optical practice in the early 19th century. The patent uses axisymmetric flat Fresnel lenses with a parabolic phase function. The size of the Fresnel end zones is on the order of 1 micron. The Fresnel lenses have multigradational microrelief. The accuracy of microrelief formation is 10-15 nanometers in terms of depth. The patent describes a method for masking an array of multigradational Fresnel lenses allowing the creation of the microrelief of a flat optical element that forms 3D images in the vicinity of zero order diffraction.

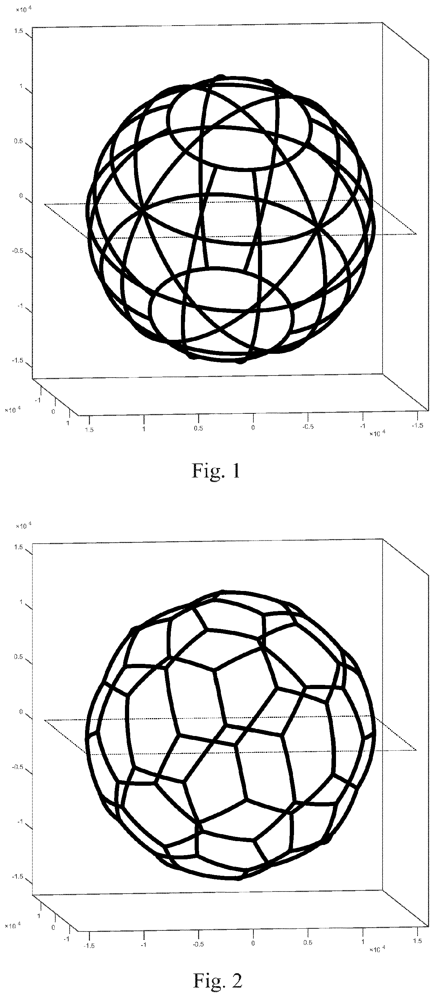

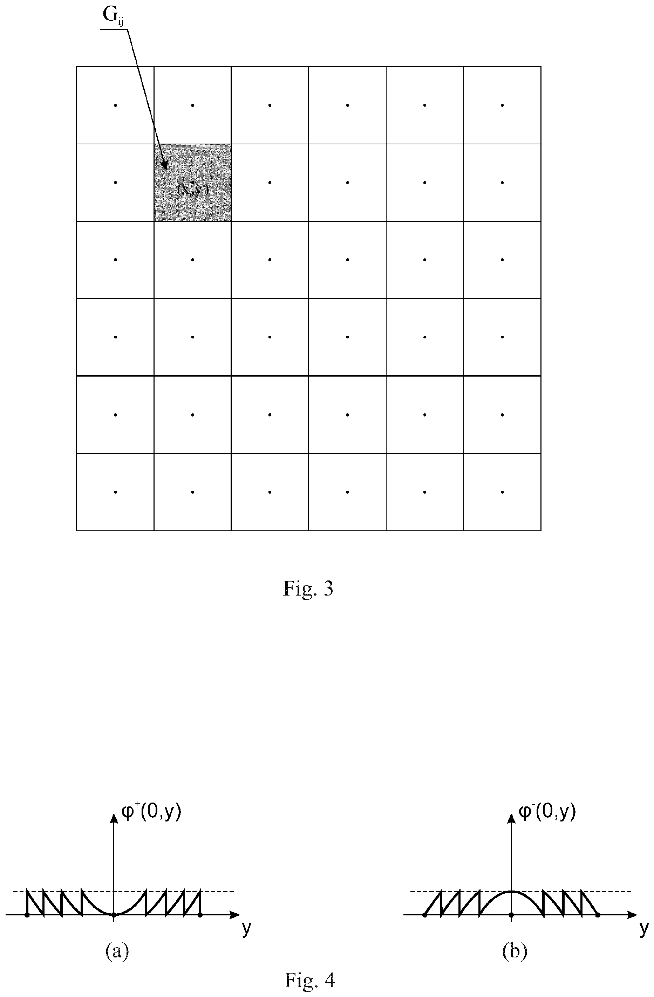

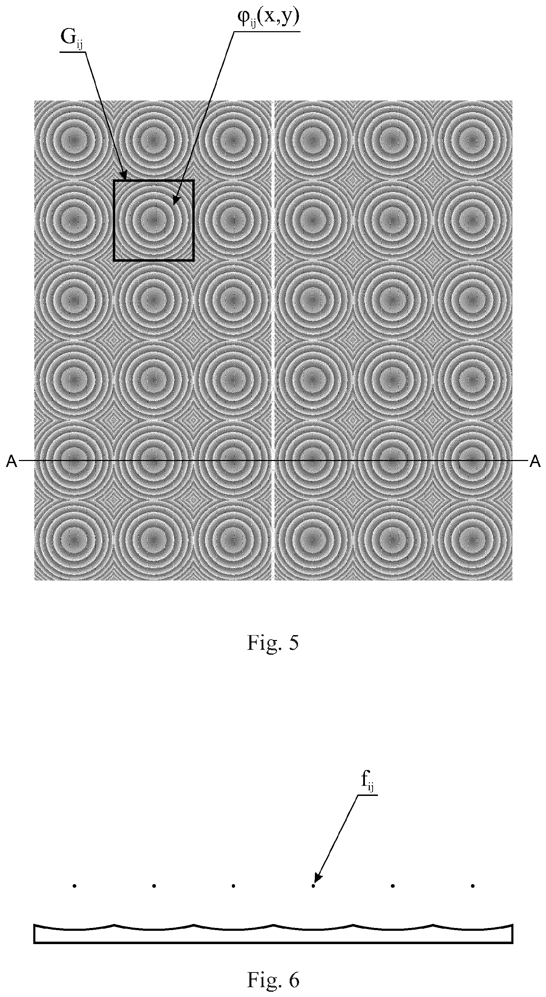

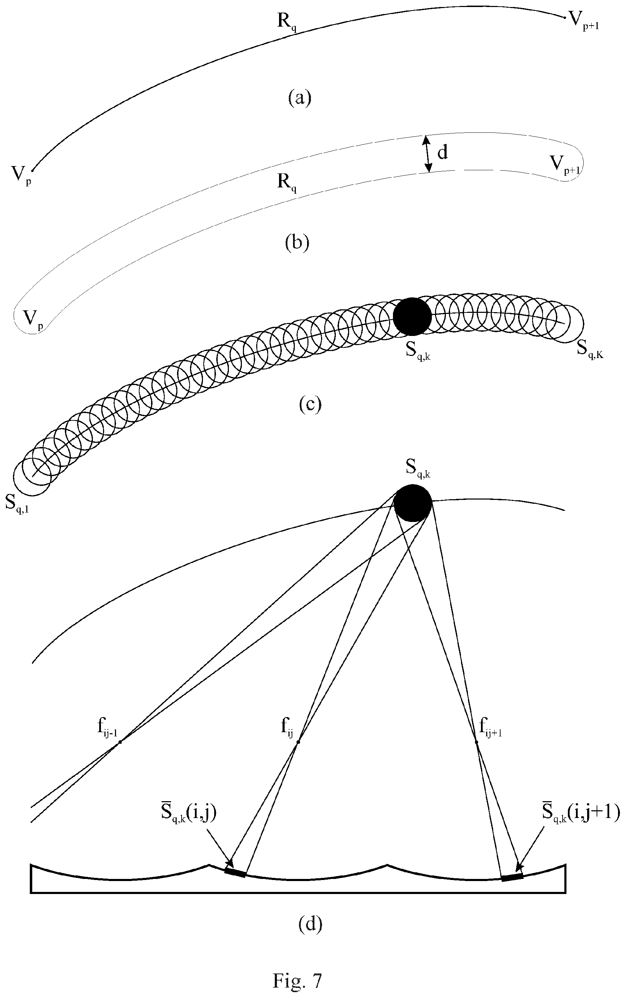

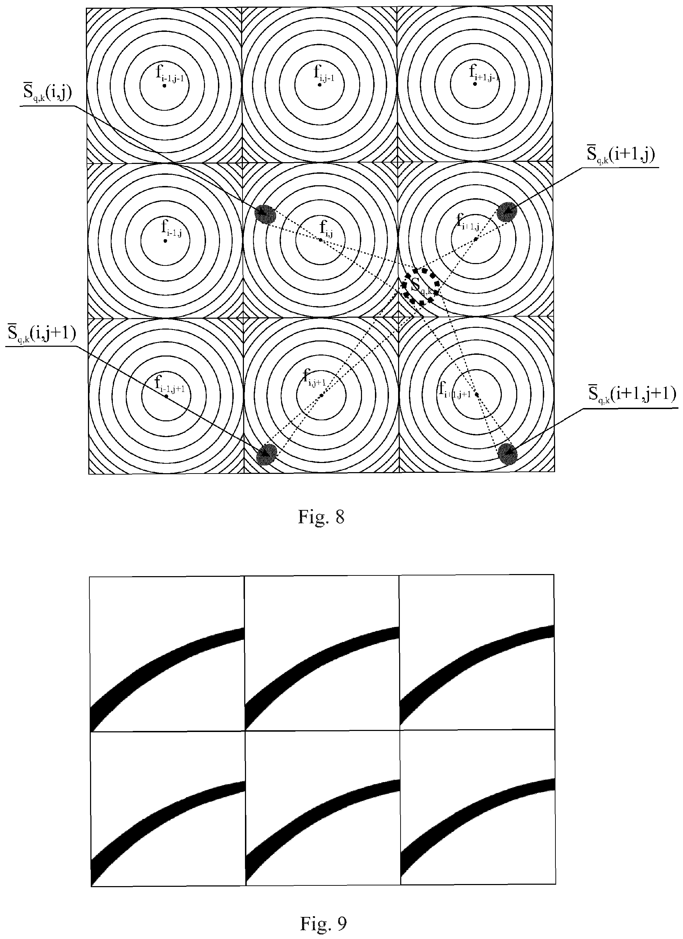

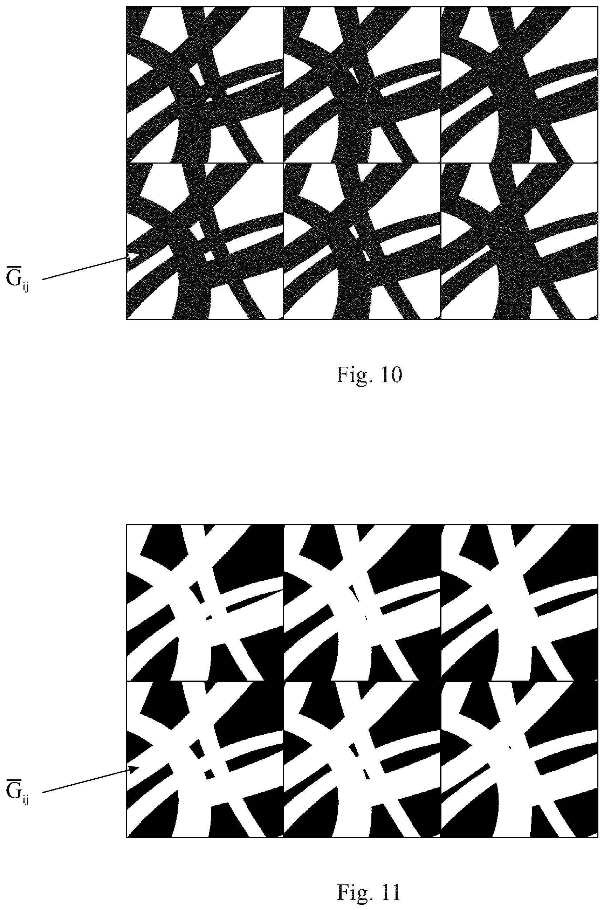

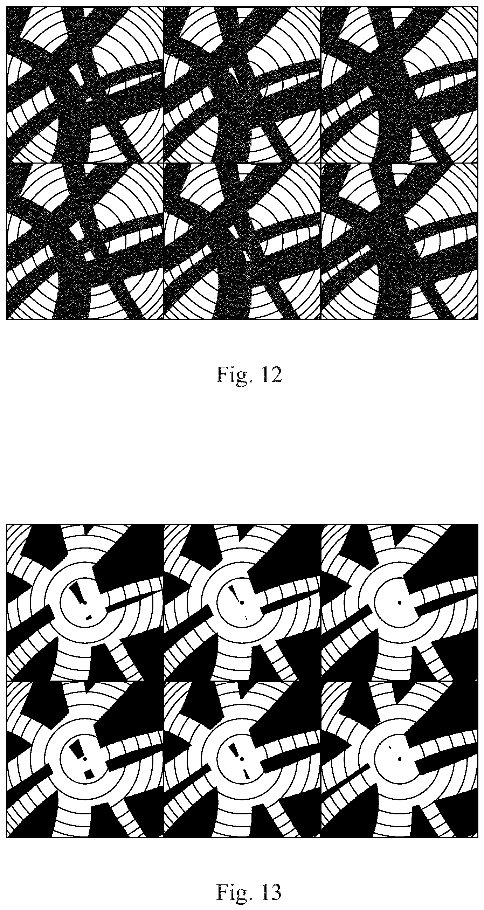

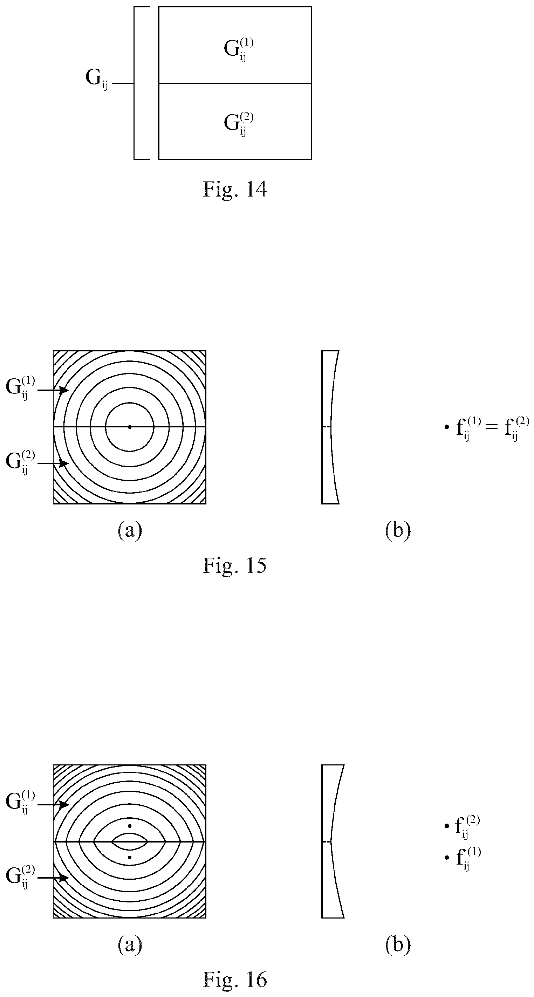

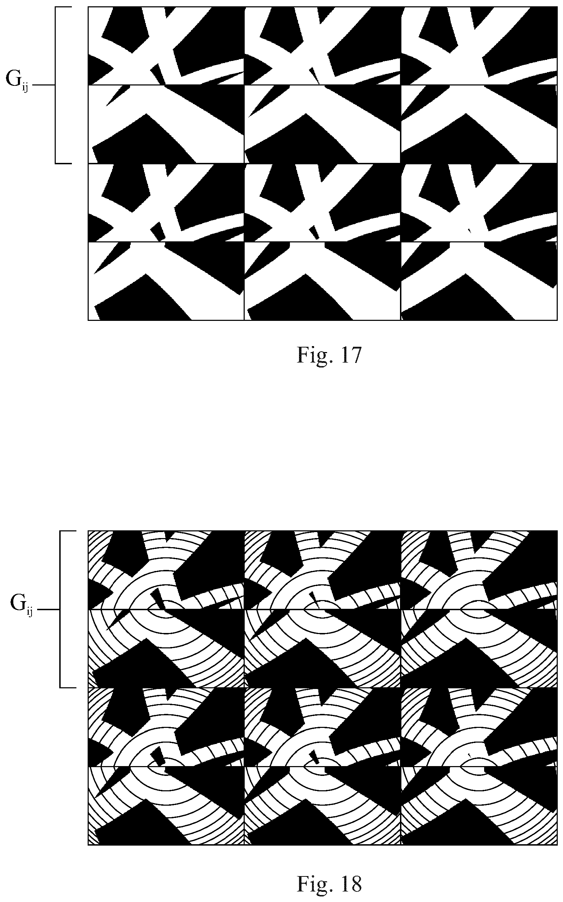

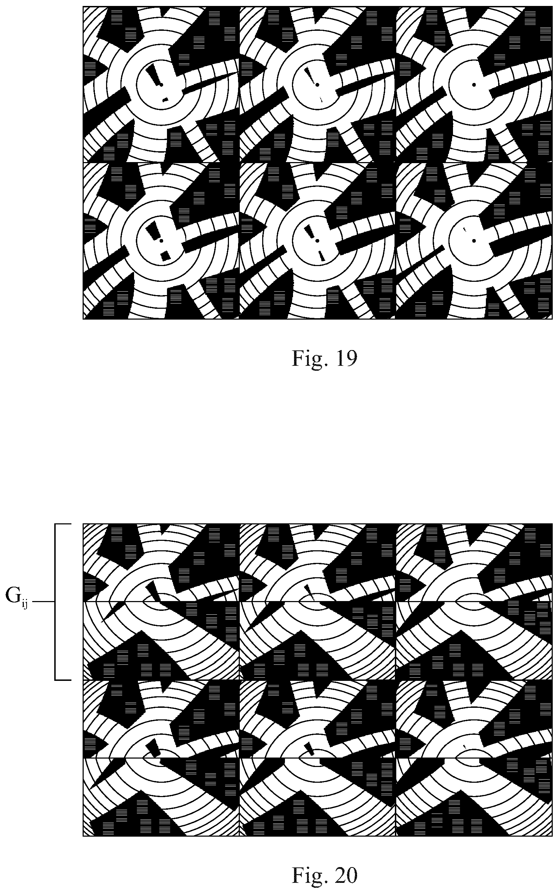

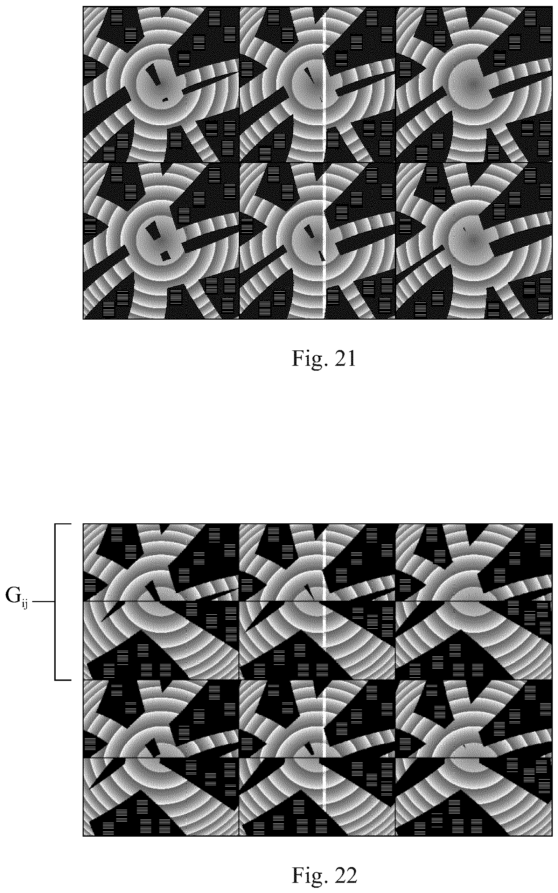

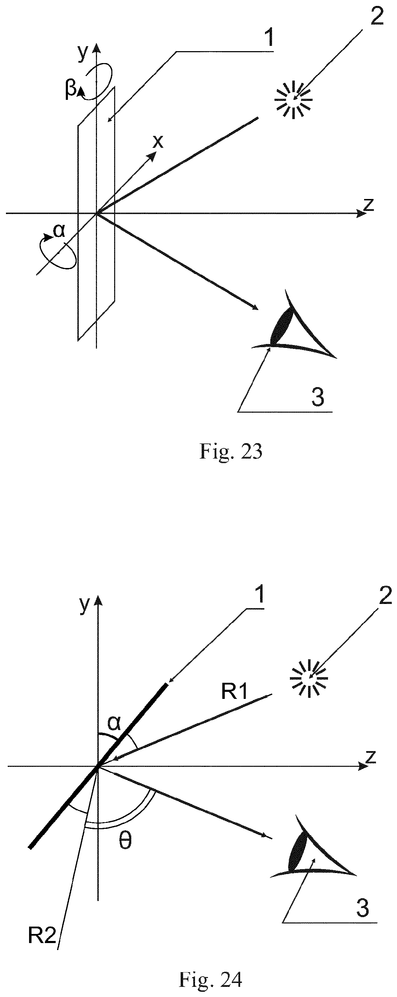

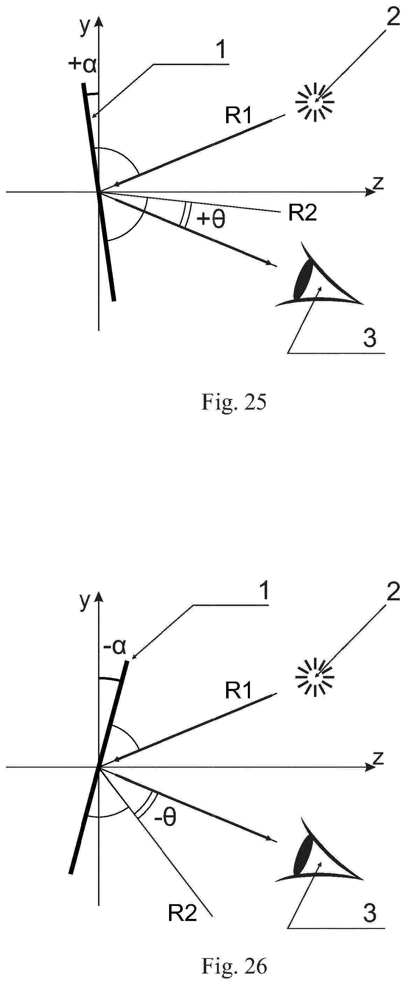

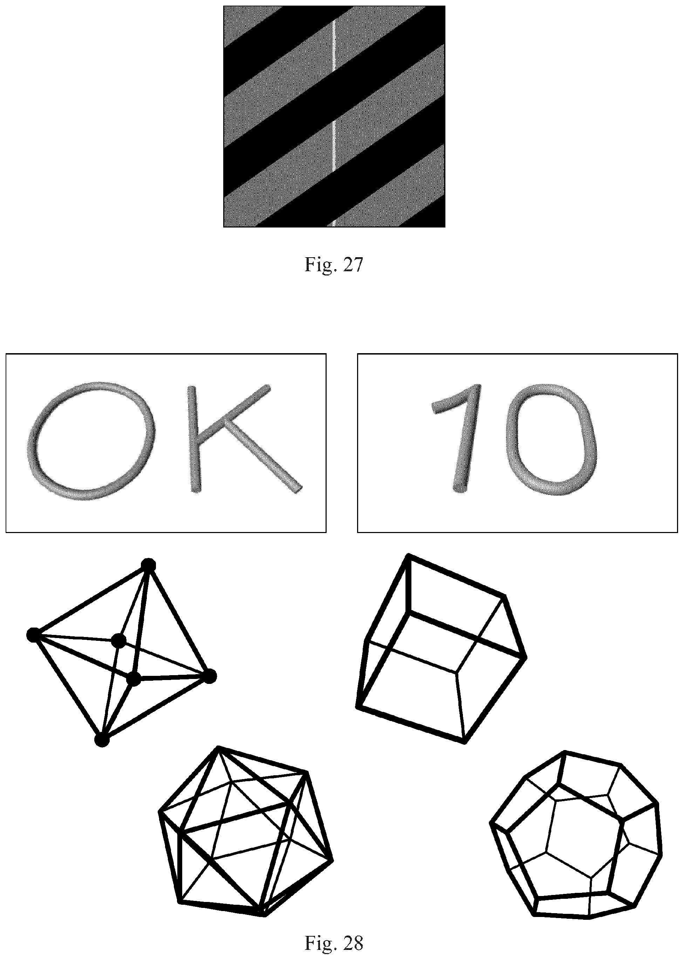

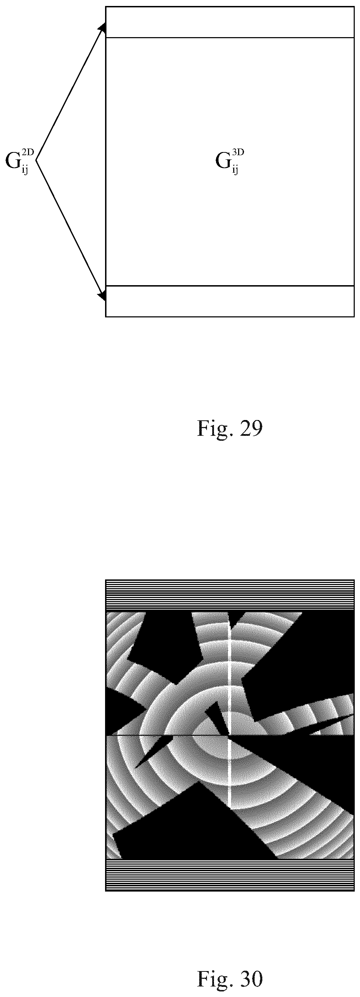

The essence of the invention is illustrated by images, where Fig. 1 shows the 3D wireframe image of a sphere; Fig. 2 shows the 3D wireframe image of truncated icosahedron, and Fig. 3 shows a variant of partitioning of optical element $G$ into elementary regions $G_{ij}$. Fig. 4 shows the cross-sections of the phase function $\varphi(x, y)$ at $x = 0$ in the case of a concave and convex Fresnel lens; Fig.5 shows the microrelief of an array of flat Fresnel lenses; Fig. 6 shows the spatial arrangement of foci $f_{ij}$ for an array of flat Fresnel lenses; Fig. 7 shows the scheme of the construction of projections $\overline{S}_{q,k}(i, j)$ of spheres $S_{q,k}$; Fig. 8 shows the arrangement of projections $\overline{S}_{q,k}(i, j)$ of spheres $S_{q,k}$ at fixed $q$ and $k$ in different regions $G_{ij}$; Fig. 9 shows the arrangement of projections $\overline{S}_{q,k}(i,j)$ in elementary regions $G_{ij}$ at fixed $q$ and for different values of parameter $k$ going over k=1, 2, 3...K; Fig. 10 shows the scheme of the arrangement of regions $\overline{G}_{ij}$ in elementary regions $G_{ij}$ according to claim 1; Fig. 11 shows the scheme of the arrangement of regions $\overline{G}_{ij}$ in elementary regions $G_{ij}$ according to claim 2; Fig. 12 shows the scheme of the formation of microrelief in elementary regions $G_{ij}$ according to claim 1; Fig. 13 shows schematically the formation of microrelief in elementary regions $G_{ij}$ according to claim 2 of the invention formula; Fig.14 shows the scheme of the partition of elementary regions $G_{ij}$ into elementary regions $G_{ij}^{(1)}$ and $G_{ij}^{(2)}$; Fig. 15 shows the scheme of the arrangement of flat Fresnel lenses in regions $G_{ij}^{(1)}$ and $G_{ij}^{(2)}$ in the case where the foci $f_{ij}^{(1)}$ and $f_{ij}^{(2)}$ coincide; Fig. 16 shows the scheme of the arrangement of flat Fresnel lenses in regions $G_{ij}^{(1)}$ and $G_{ij}^{(2)}$ in the case where the foci $f_{ij}^{(1)}$ and $f_{ij}^{(2)}$ do not coincide; Fig. 17 shows the scheme of the arrangement of regions $\overline{G}_{ij}^{(1)}$ and $\overline{G}_{ij}^{(2)}$ according to claim 1 of the invention formula; Fig. 18 shows the scheme of the microrelief formation in elementary regions $G_{ij}$ according to claims3 of the invention formula; Fig. 19 shows the scheme of the microrelief formation in elementary regions $G_{ij}$ according to claims 1 and 4 of the invention formula; Fig. 20 shows the scheme of the microrelief formation in elementary regions $G_{ij}$ according to claims 3 and 4 of the invention formula; Fig. 21 shows the halftone image of the microrelief in elementary regions $G_{ij}$ according to claims 1 and 4 of the invention formula; Fig. 22 shows the halftone image of the microrelief in elementary regions $G_{ij}$ according to claims 3 and 4 of the invention formula; Fig. 23 shows the scheme of observation of the images formed by micro-optical system; Fig. 24 shows the scheme of observation of the micro-optical system at diffraction angles greater than 60°; Fig. 25 shows the scheme of observation at diffraction angles $0° < \theta < +30°$; Fig. 26 shows the scheme of observation at diffraction angles $-30° < \theta < 0°$; Fig. 27 shows the image seen by the observer at large diffraction angles $\theta > 60°$; Fig. 28 shows several variants of 3D wireframe images; Fig. 29 shows another variant of the arrangement in elementary regions $G_{ij}$ of diffraction gratings for the formation of the 2D image; Fig. 30 shows the microrelief of the micro-optical system in elementary region $G_{ij}$ in the variant of the arrangement of diffraction gratings shown in Fig. 29.

Fig.1 shows a variant of the 3D wireframe image of a sphere. The image consists of curvilinear edges that are parallels and meridians of a globe. Different edges may have different thickness, but for the sake of simplicity we hereafter assume that all edges have the same thickness, which is equal to $d$.

Fig.2 shows another variant of the 3D wireframe image. The second 3D image consists of curvilinear edges of the truncated icosahedron lying on the sphere described above and appears as a football. All edges also have the same thickness $d$.

The micro-optical system for the formation of the 3D image has the form of a flat reflecting optical diffraction phase element. The 3D image is formed via diffraction of light on the microrelief of the flat optical element. In the proposed method of the synthesis of micro-optical systems the region of optical element G is subdivided into elementary regions $G_{ij}$. Fig.3 shows one of the partition variants. The size of elementary regions $G_{ij}$, i=1...I, j=1...J does not exceed 200 microns, which is beyond the resolution of the human eye. For the formation of the 3D image axial flat Fresnel lenses are used with parabolic phase function $\varphi(x, y) = C(x^2 + y^2)$, where $C$ is the given parameter. Fig.4 shows cross-sections of the phase function $\varphi(0, y)$ for $C > 0$ (Fig. 4a) and $C < 0$ (Fig. 4b). The depth of the microrelief is of about 0.3 microns.

Elementary regions $G_{ij}$ are filled with Fresnel lenses as shown in Fig. 5. The microrelief has multigradational structure. The depth of the microrelief at each point in Fig. 5 is proportional to darkening at that point. The area of the optical element is usually equal to several quadratic centimeters. The number of Fresnel lenses for such element is equal to several tens of thousands.

Figure 6 shows a cross-section of the lens array along line A-A passing through the centers of the lenses. A black dot above the center of each lens marks the spatial position of the lens focus $f_{ij}$. The focal distance determines the size of the outermost zone of the Fresnel lens. Different techniques can be used to form the microrelief of micro-optical systems. The most promising is the use of electron-beam technology, which makes it possible to precisely produce the microrelief of the micro-optical system with an accuracy of about 10-15 nanometers in terms of depth. The resolution of electron-beam lithographers is a hundredth of a micron or better, which makes it possible to produce Fresnel lens arrays with outermost zone sizes of the order of one micron.

The 3D image that we want to form using the micro-optical system is a wireframe image and consists of edges $R_q$, $q$=1...Q (Fig. 7a). Each edge $R_q$ is partitioned into an integer number of parts K. The thickness of an edge as shown in Fig. 7(b) is $d$. At each of the breaking points a sphere $S_{q,k}$ of diameter $d$ is placed so that the neighboring spheres intersect by more than half of their diameters as shown in Fig. 7(c). Let us fix one of the spheres $S_{q,k}$ (Fig. 7(c)) and construct its projection onto elementary region $G_{ij}$ through the focus $f_{ij}$ as shown in Fig. 7(d). Hereafter we denote the projection of sphere $S_{q,k}$ onto elementary region $G_{ij}$ as $\overline{S}_{q,k}$ $(i, j)$.

Fig.8 shows the arrangement of projections $\overline{S}_{q,k}$ $(i, j)$ of sphere $S_{q,k}$ onto different elementary regions $G_{ij}$. The projection in Fig.8 is shown in black. In Fig. 8 projections fall only into four of the nine elementary regions $G_{ij}$.

Let us compute the projections of all spheres $S_{q,k}$ for 1... K and fixed edge $R_q$ into elementary regions $G_{ij}$. The projections so computed are shown in black in Fig. 9 for six elementary regions $G_{ij}$. In Fig.8 parameter $q$ is fixed, whereas parameter $k$ goes through values 1... K.

Once this operation has been performed for all edges $R_q$, $q$=1...Q, we construct the region $\overline{G}_{ij} = U_{q,k}\overline{S}_{q,k}$ $(i, j)$, which belongs to each elementary region $G_{ij}$, $i$=1...I, $j$=1...J. Region $\overline{G}_{ij}$ is the union of regions $\overline{S}_{q,k}$ $(i, j)$ over all parameters $q$=1...Q and $k$=1...K. The black color in Fig.10 indicates regions $\overline{G}_{ij}$ for several elementary regions $G_{ij}$. Let us set the phase function $\Phi(x,y)$ equal to zero in region $\overline{G}_{ij}$ and equal to $C(x^2+y^2)$ at the points of region $G_{ij}\backslash\overline{G}_{ij}$, $i$=1...I, $j$=1...J. Region $G_{ij}\backslash\overline{G}_{ij}$, which is shown in white in Fig. 10, is the complement to region $\overline{G}_{ij}$ in elementary region $G_{ij}$. Thus the microrelief is equal to zero in black domains and is not equal to zero in white domains in Fig. 10. In the white domains the depth of the microrelief is computed by the formula $h(x,y)=0.5\cdot\Phi(x,y)$ for each point $(x,y)$ of region $G$. The variant shown in Fig. 10 corresponds to claim 1 of the invention formula.

Another variant is possible, which is proposed in claim 2 of the invention formula. This variant is shown in Fig. 11. In this variant the microrelief differs from zero in region $\overline{G}_{ij}$ and is equal to zero in region $G_{ij}\backslash\overline{G}_{ij}$. Fig. 12 provides a better illustration of the structure of the region according to claim 1 of the invention formula. As is evident from Fig. 12, the region shown in black is cut from each lens. Region $\overline{G}_{ij}$ serves as the mask for this cut. Fig. 13 shows the structure of the microrelief according to claim 2 of the invention formula. In both figures the microrelief differs from zero in regions shown in white. The difference between the variants according to claims 1 and 2 of the invention formula is that in the variant according to claim 1 at diffraction angles smaller than 60° the observer sees a 3D wireframe image consisting of dark edges against light background. In the variant according to claim 2 at diffraction angles smaller than 60° the observer sees a 3D wireframe image consisting of light edges against dark background.

In claim 3 of the invention formula a method is proposed for the synthesis of the micro-optical system that forms the effect of the alternation of two 3D wireframe images defined via vertices $V_p^{(1)}$, $p$=1...P$^{(1)}$ and edges $R_q^{(1)}$, $q$=1...Q$^{(1)}$, and, correspondingly, vertices $V_p^{(2)}$, $p$=1...P$^{(2)}$ and edges $R_q^{(2)}$, $q$=1...Q$^{(2)}$, where P$^{(1)}$, P$^{(2)}$, Q$^{(1)}$ and Q$^{(2)}$ are the given integer numbers. For the computation of the phase function of the flat optical element the region of optical element $G$ is subdivided into elementary regions $G_{ij}$, $i$=1...I, $j$=1...J with the size smaller than 200 microns. Each elementary region $G_{ij}$ is subdivided into elementary regions $G_{ij}^{(1)}$ and $G_{ij}^{(2)}$, which are responsible for the formation of different 3D images. Fig.14 shows a variant of the partition of elementary region $G_{ij}$ into elementary regions $G_{ij}^{(1)}$ and $G_{ij}^{(2)}$. In elementary regions $G_{ij}^{(1)}$ and $G_{ij}^{(2)}$ parabolic Fresnel lenses are placed with the phase functions $\varphi^{(1)}(x, y) = C^{(1)}(x^2 + y^2)$ and $\varphi^{(2)}(x, y) = C^{(2)}(x^2 + y^2)$, where $C^{(1)}$ and $C^{(2)}$ are given parameters. Different variants of the microrelief formation are possible in elementary regions $G_{ij}^{(1)}$ and $G_{ij}^{(2)}$. Fig.15 shows a variant where the spatial positions of the foci $f_{ij}^{(1)}$ and $f_{ij}^{(2)}$ coincide. Figs. 15(a) and 15(b) show the structure of the microrelief and the positions of the foci, respectively.

Fig.16 shows a variant where the spatial positions of the foci $f_{ij}^{(1)}$ and $f_{ij}^{(2)}$ of flat Fresnel lenses in regions $G_{ij}^{(1)}$ and $G_{ij}^{(2)}$ do not coincide. Figs. 16(a) and 16(b) show the structure of the microrelief and the positions of the foci, respectively. The variant shown in Fig. 16 offers a certain advantage in the formation of two 3D images because it provides a certain angular range between the formation angles of the first and second 3D images. As an example, we use the 3D images shown in Figs. 1 and 2 as the first and second images, respectively. For each Fresnel lens the spatial arrangement of the foci $f_{ij}^{(1)}$ and $f_{ij}^{(2)}$ is computed. Each edge $R_q^{(1)}$ and $R_q^{(2)}$ is subdivided into an integer number of parts K. Spheres $S_{q,k}^{(1)}$ and $S_{q,k}^{(2)}$ of diameter $d$ are placed into each partition point so that the neighboring spheres intersect by more than half of their diameter. For each elementary region $G_{ij}^{(1)}$ and $G_{ij}^{(2)}$ projections $\bar{S}_{q,k}^{(1)}(i,j)$ of sphere $S_{q,k}^{(1)}$ through the focus $f_{ij}^{(1)}$ and projections $\bar{S}_{q,k}^{(2)}(i,j)$ of sphere $S_{q,k}^{(2)}$ through the focus $f_{ij}^{(2)}$ are constructed. The union of all projections of spheres for all edges over subscripts $q$ and $k$ determines the region $\bar{G}_{ij}^{(1)} = \bigcup_{q,k} \bar{S}_{q,k}^{(1)}(i,j)$ that belongs to elementary region $G_{ij}^{(1)}$, and the region $\bar{G}_{ij}^{(2)} = \bigcup_{q,k} \bar{S}_{q,k}^{(2)}(i,j)$ that belongs to elementary region $G_{ij}^{(2)}$, and in these regions the phase function of the optical element is set equal to zero. Fig. 17 shows the structure of regions $\bar{G}_{ij}^{(1)}$ and $\bar{G}_{ij}^{(2)}$ in elementary region $G_{ij}$ consisting of regions $G_{ij}^{(1)}$ and $G_{ij}^{(2)}$. The image shown in Fig. 17 is computed according to claim 3 of the invention formula in the variant where the spatial positions of the foci $f_{ij}^{(1)}$ and $f_{ij}^{(2)}$ do not coincide. Fig.18 shows the scheme of the microrelief formation in elementary regions $G_{ij}$ according to claim 3 of the invention formula.

At each point *(x,y)* of elementary region $G_{ij}^{(1)}$ the phase function that forms the first 3D image is equal to zero at the points of elementary region $\bar{G}_{ij}^{(1)}$ and equal

to $0.5 \cdot C(x^2+y^2)$ at the points of region $G_{ij}^{(1)} \backslash \bar{G}_{ij}^{(1)}$, *i*=1...I, *j*=1...J, respectively. The points where the phase function is equal to zero correspond to black color in Fig. 18. At each point *(x,y)* of elementary region $G_{ij}^{(2)}$ the phase function that forms the second 3D image is equal to zero at the points of regions $\bar{G}_{ij}^{(2)}$ and equal to $0.5 \cdot C(x^2+y^2)$ at the points of region $G_{ij}^{(2)} \backslash \bar{G}_{ij}^{(2)}$, *i*=1...I, *j*=1...J. The points where the phase function is equal to zero correspond to black color in Fig. 18. At diffraction angles ranging from 0° to +30° the observer sees one 3D wireframe image, and at diffraction angles ranging from 0° to -30° the observer sees another 3D wireframe image. Both images consist of dark edges on a light background.

Similarly to claim 2 of the invention formula, the micro-optical system for the effect of the alternation of two 3D images can be formed in a different way, so that the phase function of the micro-optical system is equal to zero in regions $G_{ij}^{(1)} \backslash \bar{G}_{ij}^{(1)}$ and $G_{ij}^{(2)} \backslash \bar{G}_{ij}^{(2)}$ and is nonzero in regions $\bar{G}_{ij}^{(1)}$ and $\bar{G}_{ij}^{(2)}$.

The method for the synthesis of micro-optical systems proposed in claim 4 of the invention formula differs from that proposed in claim 1 of the invention formula in that in the former case each of the regions where the phase function of the optical system is equal to zero is partially or completely filled with diffraction gratings of various periods and different orientations, which, when the micro-optical system is illuminated by a source of white light, form a 2D color image seen by the observer at diffraction angles greater than 60°. Figs. 19 and 20 show the variants of the structure of the microrelief of the micro-optical system according to claims 1 and 3 of the invention formula, respectively, in that case. The diffraction gratings have periods in the interval from 0.4 to 0.6 micron and may have different orientations.

The micro-optical system made according to claims 1-4 of the invention formula in the form of hot-stamping foil, holographic threads, stickers, or laminate, is designed to protect banknotes, documents, passports, IDs, securities, and brands.

Thus the proposed method for the synthesis of micro-optical systems makes it possible to compute the microrelief of a flat optical element, which, when illuminated with white light, forms 3D images according to claims 1-4 of the invention formula. Fig. 21 shows fragments of a multigradational optical element that forms a 3D image according to claims 1 and 4 of the invention formula. The 3D image is formed at diffraction angles smaller than 60 degrees. At large diffraction angles the observer sees another 2D color image. Fig.22 shows a fragment of a multigradational optical element that forms 3D images according to claims 1 and 4 of the invention formula. At diffraction angles ranging from -30° to 30° the observer sees the effect of the alternation of two 3D images. At large diffraction angles the observer sees another 2D color image. The depth of the microrelief at each point of the optical element is proportional to the darkening at the corresponding point of the image in Figs. 21 and 22.

In Fig.23 the center of optical element 1 is placed at the coordinate origin; number 2 denotes a point source of white light, and number 3, the observer's eye, which in Fig. 23 is located in the zero order of diffraction. When the optical element is turned by angle $\alpha$ about the 0x axis and by angle $\beta$ about the 0y axis, the observer sees different views of the 3D image created according to claims 1-2 of the invention formula.

Fig. 24 shows the scheme of observation of the micro-optical system made according to claim 4 of the invention formula, at diffraction angles $\theta$ greater than 60°. Light ray R1 from source 2 strikes optical element 1 tilted by angle $\alpha$ to the 0x axis. R2 denotes the direction to the zero order of diffraction.

Fig. 25 shows the scheme of observation of micro-optical system 1 made according to claim 3 of the invention formula, at diffraction angles $0°<\theta<+30°$. In that case observer 3 sees one 3D image formed by fragments of Fresnel lenses from elementary regions $G_{ij}^{(1)}$. Fig.26 shows the scheme of observation of micro-optical system 1 made according to claim 3 of the invention formula, at diffraction angles $-30°<\theta<0$. In that case observer 3 sees another 3D image, which is formed by fragments of Fresnel lenses from elementary regions $G_{ij}^{(2)}$. The alternation of images occurs during the passage of the zero order of diffraction denoted as R2 in Figs. 25 and 26.

Fig. 27 shows the color image seen by the observer over the entire region of the optical element made according to claim 4 of the invention formula, at large diffraction angles greater than 60 degrees and observed in accordance with the scheme of observation shown in Fig. 24. This is a false-color image, where gray corresponds to green and black to red as seen by the observer in the 2D image.

Fig. 28 shows several variants of 3D wireframe images, which can also be used for the synthesis of flat diffraction security elements.

Fig. 29 shows another variant of the arrangement in elementary regions $G_{ij}$ of diffraction gratings. Here region $G_{ij}^{3D}$ contains fragments of Fresnel lenses responsible for the formation of the 3D image, and region $G_{ij}^{2D}$, which in that case consists of subregions, is partially or fully filled with diffraction gratings having small periods ranging from 0.4 to 0.6 microns that are responsible for the formation of the color 2D image seen by the observer over the entire region of the optical element at large diffraction angles greater than 60°.

Fig. 30 shows the microrelief of the micro-optical system that was formed according to claim 3 of the invention formula, in elementary region $G_{ij}$ in the variant of the arrangement of diffraction gratings shown in Fig. 29. The depth of the microrelief at each point of the optical element is proportional to darkening at the image point in Fig. 30.

The claimed micro-optical system for the formation of the 3D image uses multigradational Fresnel lenses. The main difference of the claimed micro-optical system from patent US20070268536A1 consists in the following:

1. In the known micro-optical system (the prototype) the 3D image is formed in the first order of diffraction, whereas in the claimed micro-optical system it is formed in the zero order of diffraction.

2. Unlike the prototype, where optical recording of the original is used, in the claimed invention the micro-optical system is computer synthesized. The optical element consists of fragments of multigradational Fresnel lenses. A method is proposed for computing the microrelief of the optical element that forms the given 3D image.

3. The developed methods make it possible to synthesize a flat optical element that creates the effect of the alternation of two 3D images.

4. The controlled visual feature includes the control of 3D images at small diffraction angles and the control of the 2D color image at large diffraction angles.

5. In the micro-optical system synthesised according to the claimed invention the microrelief may be formed using precision electron-beam technology. This technology is not widespread and only a few companies in the world have mastered it. All this makes it possible to narrow the scope of technologies that can be used to produce the claimed micro-optical systems thereby ensuring their bona fide protection against counterfeiting.

6. The technology of mass replication of claimed micro-optical systems is easily available and ensures low price of micro-optical systems in the case of their mass replication.

The examples of particular implementations of the invention presented below confirm the implementability of the invention without restricting its scope. To demonstrate the efficiency of the proposed synthesis method, we produced two micro-optical systems. We used electron-beam technology to produce the originals of flat reflecting optical elements. Fresnel lenses were made with a resolution of 300 and 400 nanometers and with an accuracy of 10-15 namometers in terms of depth. Diffraction gratings with a resolution of 25 nanometers in the horizontal direction (in 225x275 nm$^2$ stamps). Posi-

tive electron resist was used for exposure. After exposure and microrelief formation master matrices were made, which were then used to produce micro-optical systems in the form of stickers with protected microrelief manufactured with standard equipment for the production of relief security holograms.

Example 1.

As the first example, we computed and produced the original of a micro-optical system for the formation the 3D image that can be seen by the observer in the vicinity of the zero order of diffraction. The 3D image consists of curvilinear edges - parallels and meridians of the globe as shown in Fig. 1. The diameter of the globe was chosen to be 26 mm. The micro-optical system has the form of a flat reflecting optical phase element with the size of $30\times30$ mm². The region of the optical element G was subdivided into elementary regions $G_{ij}$, $i=1...I$, $j=1...J$ with a size of $120\times150$ micron² as shown in Fig. 29. A $120\times120$ micron² elementary region $G_{ij}^{3D}$ was selected in the central part of elementary region $G_{ij}$. Elementary region $G_{ij}^{3D}$ contained a concave Fresnel lens with a focal distance of 186 microns, which was used to form the 3D image. The total number of Fresnel lenses was 50000, I=250. J=200. The number Q of curvilinear edges $R_q$ in the 3D image of the globe is equal to 7 circles and 8 circular arcs with the common center at (0,0,0). All edges were partitioned into an integer number of parts, and sphere $S_{q,k}$ of diameter $d$ was placed at each partition point. The diameter for spheres with the coordinate $z \geq 0$ was set equal to 850 microns, and for spheres with the coordinate $z < 0$ it was set equal to 500 microns. The overlap factor of spheres was equal to 5, i.e., the distance between the centers of two neighboring spheres was five times smaller than the diameter of each of them. The total number of spheres $S_{q,k}$ was 6857. In each elementary region $G_{ij}^{3D}$ projection $\overline{S}_{q,k}(i,j)$ was constructed through the focus $f_{ij}$. The union of all projections of spheres for all edges over subscripts $q$ and $k$ defines region $\overline{G}_{ij}$ = $U_{q,k}$ $\overline{S}_{q,k}(i,j)$, which belongs to elementary region $G_{ij}^{3D}$ and is filled with fragments of the Fresnel lens, and complementary region $G_{ij}^{3D}\backslash\overline{G}_{ij}$, where the phase function is set equal to zero. Fig. 11 shows regions $\overline{G}_{ij}$ in several elementary regions $G_{ij}^{3D}$. Fig. 21 shows the structure of the microrelief. Darkening at each point in Fig. 21 is proportional to the depth of the microrelief. Diffraction gratings have periods equal to 0.45 and 0.55 micron.

Example 2.

As the second example we computed and made the original of the micro-optical system for creating the effect of the alternation of two 3D images seen by the observer in the vicinity of the zero order of diffraction. The first 3D image consists of curvilinear edges $R_q^{(1)}$ that are the parallels and meridians of the globe as in Example 1 and as shown in Fig. 1. The second 2D image consists of curvilinear edges $R_q^{(2)}$ of the truncated icosahedron lying in the circumscribed sphere and appears as a football as shown in Fig. 2. The diameter of the circumscribed sphere is 26 mm. The number Q of curvilinear edges $R_q^{(2)}$ in the 3D image of the truncated icosahedron is equal to 90 circular arcs with the common center at (0,0,0). All edges $R_q^{(2)}$ were subdivided into an integer number of parts K=42 and sphere $S_{q,k}^{(2)}$ of diameter $d$ was placed at each partition point. The diameter of the spheres with the coordinate $z \geq 0$ was set equal to 1250 microns, and that of the spheres with the coordinate $z < 0$ it was set equal to 750 microns. The overlap factor of spheres was equal to 6, i.e., the distance between the centers of two neighboring spheres was six times smaller than the diameter of each of them. The total number of spheres $S_{q,k}^{(2)}$ was 3780. The microrelief in elementary region $G_{ij}^{3D}$ was formed according to claim 3 of the invention formula. The distance between the foci of Fresnel lenses in elementary region $G_{ij}^{3D}$ is equal to 20 microns, which provides extra $\pm3°$ angular range about the zero order of diffraction. Regions $G_{ij}^{2D}$ are filled with diffraction gratings with the periods of 0.45 and 0.55 micron, which form the 2D color image. Thus at diffraction angles ranging from +3° to +33° the observer sees the 3D image shown in Fig. 1, and at diffraction angles ranging from -3° to -33° the observer sees the 3D image shown in Fig. 2. At diffraction angles greater than 60° the observer sees over the entire region of the optical element another 2D color image, which is shows in Fig. 27 in false colors.

**Claims**

1. A computer-implemented method of the synthesis of micro-optical systems in the form of a flat reflecting optical diffraction phase element for the formation 3D wireframe images defined via vertices $V_p$, p=1...P, and edges $R_q$, q=1...Q, wherein

    - for the computation of the phase function of the flat optical element the region of optical element G is subdivided into elementary regions $G_{ij}$, i=1...I, j=1...J with the size smaller than 200 microns,
- in each of these regions an axial parabolic Fresnel lens is computed with the phase function $\varphi(x, y) = C(x^2 + y^2)$, where $C$ is the given parameter, and for each Fresnel lens the position of the focus $f_{ij}$, and each edge $R_q$ is subdivided into an integer number of parts K, and sphere $S_{q,k}$ of diameter $d$ is placed at each partition point so that the neighboring spheres intersect by more than half their diameter, and for each elementary region $G_{ij}$ projection $\overline{S}_{q,k}(i,j)$ of sphere $S_{q,k}$ through the focus $f_{ij}$ is constructed, and the union of all projections of spheres for all edges over subscripts $q$ and $k$ defines region $\overline{G}_{ij} = U_{q,k}\,\overline{S}_{q,k}\,(i,j)$ that belongs to elementary region $G_{ij}$,
- the phase function in region $\overline{G}_{ij}$ is set equal to zero, and so the phase function $\Phi(x,y)$ of the optical element is computed at each point $(x,y)$ of region G so that function $\Phi(x,y)$ is equal to zero at the points of regions $\overline{G}_{ij}$ and equal to $C(x^2 +y^2)$ at the points of region $G_{ij}\backslash\overline{G}_{ij}$, $i=1...I$, $j=1...J$,
- the microrelief $h(x,y)=0.5\cdot\Phi(x,y)$ is computed for each point $(x,y)$ of region G, such that at diffraction angles smaller than 60° the observer sees a 3D wireframe image consisting of dark edges against light background.

2. A computer-implemented method of the synthesis of micro-optical systems in the form of a flat reflecting optical diffraction phase element for the formation 3D wireframe images defined via vertices $V_p$, $p=1...P$, and edges $R_q$, $q=1...Q$, wherein

- for the computation of the phase function of the flat optical element the region of optical element G is subdivided into elementary regions $G_{ij}$, $i=1...I$, $j=1...J$ with the size smaller than 200 microns,
- in each of these regions an axial parabolic Fresnel lens is computed with the phase function $\varphi(x, y) = C(x^2 + y^2)$, where C is the given parameter, and for each Fresnel lens the position of the focus $f_{ij}$, and each edge $R_q$ is subdivided into an integer number of parts K, and sphere $S_{q,k}$ of diameter $d$ is placed at each partition point so that the neighboring spheres intersect by more than half their diameter, and for each elementary region $G_{ij}$ projection $\overline{S}_{q,k}(i,j)$ of sphere $S_{q,k}$ through the focus $f_{ij}$ is constructed, and the union of all projections of spheres for all edges over subscripts $q$ and $k$ defines region $\overline{G}_{ij} = U_{q,k}\,\overline{S}_{q,k}\,(i,j)$ that belongs to elementary region $G_{ij}$,
- the phase function in region $G_{ij}\backslash\overline{G}_{ij}$ is set equal to zero, and so the phase function $\Phi(x,y)$ of the optical element is computed at each point $(x,y)$ of region G so that function $\Phi(x,y)$ is equal to zero at the points of regions $G_{ij}\backslash\overline{G}_{ij}$ and equal to $C(x^2+y^2)$ at the points of region $G_{ij}$, $i=1...I$, $j=1..J$,
- the microrelief $h(x,y)=0.5\cdot\Phi(x,y)$ is computed for each point $(x,y)$ of region G, such that at diffraction angles smaller than 60° the observer sees a 3D wireframe image consisting of light edges against dark background.

3. A computer-implemented method of the synthesis of a micro-optical system in the form of a flat reflecting optical diffraction phase element for creating the effect of the alternation of two 3D wireframe images defined via vertices $V_p^{(1)}$, $p=1...P^{(1)}$ and edges $R_q^{(1)}$, $q=1...Q^{(1)}$ and, correspondingly, vertices $V_p^{(2)}$, $p=1...P^{(2)}$ and edges $R_q^{(2)}$, $q=1...Q^{(2)}$, wherein

- for the computation of the phase function of the flat optical element the region of optical element G is subdivided into elementary regions $G_{ij}$, $i=1...I$, $j=1...J$ with the size smaller than 200 microns, each elementary region $G_{ij}$ is subdivided into elementary regions $G_{ij}^{(1)}$ and $G_{ij}^{(2)}$, which are responsible for the formation of different 3D images;

- in elementary regions $G_{ij}^{(1)}$ and $G_{ij}^{(2)}$ parabolic Fresnel lenses are placed with the phase functions $\varphi^{(1)}(x, y) = C^{(1)}(x^2 + y^2)$ and $\varphi^{(2)}(x, y) = C^{(2)}(x^2 + y^2)$, where $C^{(1)}$ and $C^{(2)}$ are given parameters, and for each Fresnel lens the positions of the foci $f_{ij}^{(1)}$ and $f_{ij}^{(2)}$ is computed, and each edge $R_q^{(1)}$ and $R_q^{(2)}$ is subdivided into an integer number of parts K, spheres $S_{q,k}^{(1)}$ and $S_{q,k}^{(2)}$ of diameter $d$ are placed at each partition point so that the neighboring spheres intersect by more than half of their diameter, and for each elementary region $G_{ij}^{(1)}$ and $G_{ij}^{(2)}$ projections $\bar{s}_{q,k}^{(1)}(i,j)$ of sphere $S_{q,k}^{(1)}$ and $\bar{s}_{q,k}^{(2)}(i,j)$ of sphere $S_{q,k}^{(2)}$ through the foci $f_{ij}^{(1)}$ and $f_{ij}^{(2)}$ respectively, are constructed, and the union of all projections of spheres for all edges over subscripts $q$ and $k$ defines region $\bar{G}_{ij}^{(1)} = U_{q,k}\,\bar{s}_{q,k}^{(1)}\,(i,j)$ that belongs to elementary region $G_{ij}^{(1)}$, and defines

region $\bar{G}_{ij}^{(2)} = \mathbf{U}_{q,k} \, \bar{S}_{q,k}^{(2)} \, (i,j)$ that belongs to elementary region $G_{ij}^{(2)}$ where the phase function of the optical element is set equal to zero, and thus at each point in *(x,y)* of elementary region $G_{ij}^{(1)}$ the phase function that forms the first 3D image is equal to zero at the points of elementary region $\bar{G}_{ij}^{(1)}$ and equal to $0.5 \cdot C(x^2 + y^2)$ at the points of region $G_{ij}^{(1)} \backslash \bar{G}_{ij}^{(1)}$, *i*=1...I, *j*=1...J, and, correspondingly, at each point *(x,y)* of elementary region $G_{ij}^{(2)}$ the phase function that forms the second 3D image is equal to zero at the points of regions $\bar{G}_{ij}^{(2)}$ and equal to $0.5 \cdot C(x^2 + y^2)$ at the points of region $G_{ij}^{(2)} \backslash \bar{G}_{ij}^{(2)}$, *i*=1...I, *j*=1..J, such that at diffraction angles ranging from 0° to +30° the observer sees one 3D wireframe image, and at diffraction angles ranging from 0° to -30° the observer sees another 3D wireframe image, and both images consist of dark edges on a light background.

4. A computer-implemented method of the synthesis of a micro-optical system according to any one of claims 1-3, wherein each of the regions where the phase function fulfills $\Phi(x,y)=0$ is partially or completely filled with diffraction gratings of various periods and different orientations, which, when the micro-optical system is illuminated by a source of white light, form a 2D color image seen by the observer at diffraction angles greater than 60°.

**Patentansprüche**

1. Computerimplementiertes Verfahren zur Synthese mikrooptischer Systeme in Form eines flachen, reflektierenden optischen Beugungsphasenelements zur Erzeugung von 3D-Drahtgitterbildern, die durch Eckpunkte $V_p$, *p=1...* P und Kanten $R_q$, *q=1...* Q definiert sind, wobei:

   - zur Berechnung der Phasenfunktion des flachen optischen Elements der Bereich des optischen Elements G in elementare Bereiche $G_{ij}$, i = 1... I, j = 1... *j* unterteilt wird, wobei die Größe weniger als 200 $\mu$m beträgt,
   - In jedem dieser Bereiche eine axiale parabolische Fresnel-Linse mit der Phasenfunktion $\varphi$ $(x, y) = C(x^2 + y^2)$ berechnet wird, wobei C ein vorgegebener Parameter ist, und für jede Fresnel-Linse die Position des Brennpunkts $f_{ij}$ und jede Kante $R_q$ in eine ganze Zahl von Teilen K unterteilt wird, und die Sphäre $S_{q,k}$ mit Durchmesser d an jedem Teilungspunkt platziert wird, so dass sich die benachbarten Sphären um mehr als die Hälfte ihres Durchmessers schneiden, und für jeden elementaren Bereich $G_{ij}$ die Projektion $\overline{S}_{q,k}(i, j)$ *der* Sphäre $S_{q,k}$ durch den Brennpunkt $f_{ij}$ konstruiert wird, und die Verbindung aller Projektionen $\overline{G}_{ij} = U_{q,k} \, \overline{S}_{q,k} \, (i, j)$ von Sphären für alle Kanten mit den Indizes *q* und *k* den Bereich definiert, der zum elementaren Bereich $G_{ij}$ gehört,
   - die Phasenfunktion in $\overline{G}_{ij}$ gleich null eingestellt wird, so dass die Phasenfunktion $\Phi(x,y)$ des optischen Elements an jedem Punkt (x, y) von Bereich G berechnet wird, so dass die Funktion $\Phi(x,y)$ gleich null an den Punkten der Bereiche $\overline{G}_{ij}$ und gleich $C(x^2 + y^2)$ an den Punkten von Bereich $G_{ij} \backslash \overline{G}_{ij}$, *i*=1...I, *j*=1..J, ist,
   - das Microrelief $h(x,y)$ =0.5. $\Phi(x,y)$ für jeden Punkt *(x,y)* von Bereich G berechnet wird, so dass an Beugungswinkeln von weniger als 60° der Betrachter ein 3D- Drahtgitterbild sieht, das aus dunklen Kanten vor hellem Hintergrund besteht.

2. Computerimplementiertes Verfahren zur Synthese mikrooptischer Systeme in Form eines flachen, reflektierenden optischen Beugungsphasenelements zur Erzeugung von 3D-Drahtgitterbildern, die durch Eckpunkte $V_p$, *p=1...* P und Kanten $R_q$, *q=1...* Q definiert werden, wobei:

   - zur Berechnung der Phasenfunktion des flachen optischen Elements der Bereich des optischen Elements G in Elementarbereiche $G_{ij}$, i = 1... I, j = *1... J* unterteilt wird, wobei die Größe weniger als 200 $\mu$m beträgt,
   - in jedem dieser Bereiche eine axiale parabolische Fresnel-Linse mit der Phasenfunktion $\varphi$ $(x, y) = C(x^2 + y^2)$ berechnet wird, wobei C ein vorgegebener Parameter ist, und für jede Fresnel-Linse die Position des Brennpunkts $f_{ij}$ und jede Kante $R_q$ in eine ganze Zahl von Teilen K unterteilt wird, und die Sphäre $S_{q,k}$ mit Durchmesser d an jedem Teilungspunkt platziert wird, so dass sich die benachbarten Sphären um mehr als die Hälfte ihres Durchmessers schneiden, und für jeden elementaren Bereich $G_{ij}$ die Projektion $\overline{S}_{q,k}(i, j)$ der Sphäre $S_{q,k}$ durch den Fokus $f_{ij}$ konstruiert wird, und die Verbindung aller Projektionen von Sphären für alle Kanten mit den Indizes *q* und *k* den Bereich $\overline{G}_{ij} = U_{q,k} \overline{S}_{q,k}$ $(i, j)$ definiert, der zum elementaren Bereich $G_{ij}$ gehört
   - die Phasenfunktion im Bereich $G_{ij} \backslash \overline{G}_{ij}$ auf gleich null gesetzt wird und so dass die Phasenfunk-

tion $\Phi(x,y)$ des optischen Elements an jedem Punkt $(x,y)$ von Bereich G berechnet wird, so dass die Funktion $\Phi(x,y)$ gleich null an den Punkten der Bereiche $G_{ij}\backslash\overline{G}_{ij}$ und gleich $C(x^2+y^2)$ an den Punkten von Bereich $G_{ij}$, i=1...I, j=1...J ist,

- das Microrelief $h(x,y)=0.5\ \Phi(x,y)$ für jeden Punkt $(x,y)$ von Bereich G berechnet wird, so dass an Beugungswinkeln von weniger als 60° der Betrachter ein 3D- Drahtgitterbild sieht, das aus hellen Kanten vor dunklem Hintergrund besteht.

3. Computerimplementiertes Verfahren zur Synthese mikrooptischer Systeme in Form eines flachen, reflektierenden optischen Beugungsphasenelements zur Erzeugung des Effekts des Wechsels von zwei 3D-Drahtgitterbildern, die durch die Eckpunkte $V_p^{(1)}$, p=1...P$^{(1)}$ und Kanten $R_q^{(1)}$, q=1...Q$^{(1)}$ und, entsprechend, die Eckpunkte $V_p^{(2)}$, p=1...P$^{(2)}$ und Kanten $R_q^{(2)}$, q=1...Q$^{(2)}$ definiert sind, wobei:

- zur Berechnung der Phasenfunktion des flachen optischen Elements der Bereich des optischen Elements G in elementare Bereiche $G_{ij}$, i = 1... I, j = 1... J unterteilt wird, wobei die Größe weniger als 200 $\mu$m beträgt, wobei jeder Elementbereich $G_{ij}$ in Elementarbereiche $G_{ij}^{(1)}$ und $G_{ij}^{(2)}$ unterteilt wird, die für die Bildung von verschiedenen 3D-Bildern verantwortlich sind;

- in elementaren Bereichen $G_{ij}^{(1)}$ und $G_{ij}^{(2)}$ parabolische Fresnel-Linsen mit den Phasenfunktionen $\varphi^{(1)}(x, y) = C^{(1)}(x^2 + y^2)$ and $\varphi^{(2)}(x, y) = C^{(2)}(x^2 + y^2)$ platziert werden, wobei $C^{(1)}$ und $C^{(2)}$ vorgegebene Parameter sind und für jede Fresnel-Linse werden die Positionen der Brennpunkte $f_{ij}^{(1)}$ und $f_{ij}^{(2)}$ berechnet werden, und jede Kante $R_q^{(1)}$ und $R_q^{(2)}$ wird in eine ganze Zahl von Teilen K unterteilt wird, die Sphären $S_{q,k}^{(1)}$ und $S_{q,k}^{(2)}$ mit Durchmesser d an jedem Teilungspunkt platziert werden, so dass sich die benachbarten Sphären um mehr als die Hälfte ihres Durchmessers schneiden, und für jeden elementaren Bereich $G_{ij}^{(1)}$ und

$G_{ij}^{(2)}$ Projektionen $\bar{S}_{q,k}^{(1)}(i,j)$ von Sphäre $S_{q,k}^{(1)}$ und $\bar{S}_{q,k}^{(2)}(i,j)$ der Sphäre $S_{q,k}^{(2)}$ durch die Brennpunkte $f_{ij}^{(1)}$ bzw. $f_{ij}^{(2)}$ konstruiert werden, und die Verbindung aller Projektionen von Sphären für alle Kanten mit den Indizes q und k den Bereich $\bar{G}_{ij}^{(1)} = \bigcup_{q,k}\ \bar{S}_{q,k}^{(1)}(i,j)$ definiert, der zum elementaren Bereich $G_{ij}^{(1)}$ gehört und den Bereich $\bar{G}_{ij}^{(2)} = \bigcup_{q,k} \bar{S}_{q,k}^{(2)}(i,j)$ definiert, der zum elementaren Bereich $G_{ij}^{(2)}$ gehört, wobei die Phasenfunktion des optischen Elements gleich null eingestellt wird und somit jeder Punkt in $(x,y)$ des elementaren Bereichs $G_{ij}^{(1)}$ der Phasenfunktion, die das erste 3D-Bild bildet, gleich null an den Punkten des elementaren Bereichs $\bar{G}_{ij}^{(1)}$ ist und gleich 0.5. $C(x^2+y^2)$ an den Punkten des Bereichs $G_{ij}^{(1)}\backslash\bar{G}_{ij}^{(1)}$, i=1...I, j=1...J ist und entsprechend, an jedem Punkt (x, y) des elementaren Bereichs $G_{ij}^{(2)}$ der Phasenfunktion, die das zweite 3D-Bild bildet, gleich null an den Punkten des elementaren Bereichs $\bar{G}_{ij}^{(2)}$ ist und gleich 0.5. C $(x^2 +y^2)$ an den Punkten des Bereichs $G_{ij}^{(2)}\backslash\bar{G}_{ij}^{(2)}$, i=1...I, J=1..J ist, so dass bei Beugungswinkeln, die im Bereich von 0° bis +30° liegen, der Betrachter ein 3D-Drahtgitterbild sieht, und bei Beugungswinkeln, die im Bereich von 0° bis -30° liegen, der Betrachter ein 3D- Drahtgitterbild sieht, und beide Bilder aus dunklen Kanten auf hellem Hintergrund bestehen.

4. Computerimplementiertes Verfahren zur Synthese eines mikrooptischen Systems nach einem der Ansprüche 1 bis 3, wobei jeder der Bereiche, in denen die Phasenfunktion $\Phi(x,y)=0$ erfüllt, teilweise oder vollständig mit Beugungsgittern unterschiedlicher Perioden und unterschiedlicher Ausrichtungen gefüllt ist, die, wenn das mikrooptische System mit einer Quelle von weißem Licht beleuchtet wird, ein 2D-Farbbild bilden, das vom Betrachter unter Beugungswinkeln von mehr als 60° gesehen wird.

**Revendications**

1. Procédé mis en œuvre par ordinateur pour la synthèse de systèmes micro-optiques sous la forme d'un élément de phase de diffraction optique à réfléchissement plat pour la formation d'images filaires 3D définies via des sommets $V_p$, $p=1...$ P, et des arêtes $R_q$, $q=1...$ Q, dans lequel

   - pour le calcul de la fonction de phase de l'élément optique plat, la région de l'élément optique G est subdivisée en régions élémentaires $G_{ij}$, $i=1...$ I, $j=1...$ J dont la taille est inférieure à 200 microns,
   - dans chacune de ces régions, une lentille de Fresnel parabolique axiale est calculée avec la fonction de phase $\varphi(x, y) = C(x^2 + y^2)$, où C est le paramètre donné, et, pour chaque lentille de Fresnel, la position du foyer $f_{ij}$ est calculée et chaque arête $R_q$ est subdivisée en un nombre entier de parties K, et une sphère $S_{q,k}$ de diamètre $d$ est placée à chaque point de partition de sorte que les sphères voisines se croisent sur plus de la moitié de leur diamètre, et pour chaque région élémentaire $G_{ij}$, la projection $\overline{S}_{q,k}(i, j)$ de la sphère $S_{q,k}$ à travers le foyer $f_{ij}$ est construite, et l'union de toutes les projections de sphères pour toutes les arêtes sur les indices $q$ et $k$ définit la région $\overline{G}_{ij} = U_{q,k}\overline{S}_{q,k}(i, j)$ qui appartient à la région élémentaire $G_{ij}$,
   - la fonction de phase dans la région $\overline{G}_{ij}$ est définie comme étant égale à zéro, et ainsi la fonction de phase $\Phi(x,y)$ de l'élément optique est calculée à chaque point $(x,y)$ de la région G de sorte que la fonction $\Phi(x,y)$ est égale à zéro aux points des régions $\overline{G}_{ij}$ et est égale à $C(x^2 +y^2)$ aux points de la région $G_{ij}\backslash\overline{G}_{ij}$, $i=1...$ I, $j=1...$ J,
   - le microrelief $h(x,y)=0.5\cdot\Phi(x,y)$ est calculé pour chaque point $(x, y)$ de la région G, de sorte qu'à des angles de diffraction inférieurs à 60°, l'observateur voit une image filaire 3D constituée d'arêtes sombres sur fond clair.

2. Procédé mis en œuvre par ordinateur pour la synthèse de systèmes micro-optiques sous la forme d'un élément de phase de diffraction optique à réfléchissement plat pour la formation d'images filaires 3D définies via des sommets $V_p$, $p=1...$ P, et des arêtes $R_q$, $q=1...$ Q, dans lequel

   - pour le calcul de la fonction de phase de l'élément optique plat, la région de l'élément optique G est subdivisée en régions élémentaires $G_{ij}$, $i=1...$ I, $j=1...$ J dont la taille est inférieure à 200 microns,
   - dans chacune de ces régions, une lentille de Fresnel parabolique axiale est calculée avec la fonction de phase $\varphi(x, y) = C(x^2 + y^2)$, où C est le paramètre donné, et, pour chaque lentille de Fresnel, la position du foyer $f_{ij}$ est calculée, et chaque arête $R_q$ est subdivisée en un nombre entier de parties K, et une sphère $S_{q,k}$ de diamètre d est placée à chaque point de partition de sorte que les sphères voisines se croisent sur plus de la moitié de leur diamètre, et pour chaque région élémentaire $G_{ij}$, la projection $\overline{S}_{q,k}(i, j)$ de la sphère $S_{q,k}$ à travers le foyer $f_{ij}$ est construite, et l'union de toutes les projections de sphères pour toutes les arêtes sur les indices $q$ et $k$ définit la région $\overline{G}_{ij} = U_{q,k}\overline{S}_{q,k}(i, j)$ qui appartient à la région élémentaire $G_{ij}$,
   - la fonction de phase dans la région $G_{ij}\backslash\overline{G}_{ij}$ est définie comme étant égale à zéro, et ainsi la fonction de phase $\Phi(x,y)$ de l'élément optique est calculée à chaque point $(x,y)$ de la région G de sorte que la fonction $\Phi(x,y)$ est égale à zéro aux points des régions $G_{ij}\backslash\overline{G}_{ij}$ et est égale à $C(x^2 +y^2)$ aux points de la région $G_{ij}$, $i=1...$ I, $j=1...$ J,
   - le microrelief $h(x,y)=0.5\cdot\Phi(x,y)$ est calculé pour chaque point $(x,y)$ de la région G, de sorte qu'à des angles de diffraction inférieurs à 60°, l'observateur voit une image filaire 3D constituée d'arêtes claires sur fond sombre.

3. Procédé mis en œuvre par ordinateur pour la synthèse d'un système micro-optique sous la forme d'un élément de phase de diffraction optique à réfléchissement plat permettant de créer l'effet de l'alternance de deux images filaires 3D définies via des sommets $V_p^{(1)}$, $p=1..$P$^{(1)}$ et des arêtes $R_q^{(1)}$, $q=1...$Q$^{(1)}$ et, de manière correspondante, des sommets $V_p^{(2)}$, $p=1...$P$^{(2)}$ et des arêtes $R_q^{(2)}$, $q=1...$Q$^{(2)}$, dans lequel,

   - pour le calcul de la fonction de phase de l'élément optique plat, la région de l'élément optique G est subdivisée en régions élémentaires $G_{ij}$, $i=1...$I, $j=1...$J dont la taille est inférieure à 200 microns, et chaque région élémentaire $G_{ij}$ est subdivisée en des régions élémentaires $G_{ij}^{(1)}$ et $G_{ij}^{(2)}$ qui sont responsables de la formation de différentes images 3D ;
   - dans les régions élémentaires $G_{ij}^{(1)}$ et $G_{ij}^{(2)}$, des lentilles de Fresnel paraboliques sont placées avec les fonctions de phase $\varphi^{(1)}(x, y) = C^{(1)}(x^2 + y^2)$ et $\varphi^{(2)}(x, y) = C^{(2)}(x^2 + y^2)$, où $C^{(1)}$ et $C^{(2)}$ sont des paramètres donnés, et pour chaque lentille de Fresnel, les positions des foyers $f_{ij}^{(1)}$ et $f_{ij}^{(2)}$ sont calculées, et chaque arête $R_q^{(1)}$ et

$R_q^{(2)}$ est subdivisée en un nombre entier de parties K, des sphères $S_{q,k}^{(1)}$ et $S_{q,k}^{(2)}$ de diamètre d sont placées à chaque point de partition de sorte que les sphères voisines se croisent sur plus de la moitié de leur diamètre, et pour chaque région élémentaire $G_{ij}^{(1)}$ et $G_{ij}^{(2)}$, des projections $\bar{S}_{q,k}^{(1)}(i,j)$ de la sphère $S_{q,k}^{(1)}$ et $\bar{S}_{q,k}^{(2)}(i,j)$ de la sphère $S_{q,k}^{(2)}$ à travers les foyers $f_{ij}^{(1)}$ et $f_{ij}^{(2)}$, respectivement, sont construites, et l'union de toutes les projections des sphères pour toutes les arêtes sur les indices q et *k* définit la région $\bar{G}_{ij}^{(1)} = \bigcup_{q,k} \bar{S}_{q,k}^{(1)}(i,j)$ qui appartient à la région élémentaire $G_{ij}^{(1)}$, et définit la région $\bar{G}_{ij}^{(2)} = \bigcup_{q,k} \bar{S}_{q,k}^{(2)}(i,j)$ qui appartient à la région élémentaire $G_{ij}^{(2)}$ où la fonction de phase de l'élément optique est définie comme étant égale à zéro, et ainsi à chaque point dans *(x,y)* de la région élémentaire $G_{ij}^{(1)}$, la fonction de phase qui forme la première image 3D est égale à zéro aux points de la région élémentaire $\bar{G}_{ij}^{(1)}$ et est égale à $0.5 \cdot C(x^2+y^2)$ aux points de la région $G_{ij}^{(1)} \backslash \bar{G}_{ij}^{(1)}$, *i*=1...I, *j*=1...J, et, de manière correspondante, à chaque point *(x,y)* de la région élémentaire $G_{ij}^{(2)}$, la fonction de phase qui forme la deuxième image 3D est égale à zéro aux points des régions $\bar{G}_{ij}^{(2)}$ et est égale à $0.5 \cdot C(x^2+y^2)$ aux points de la région $G_{ij}^{(2)} \backslash \bar{G}_{ij}^{(2)}$ *i*=1... I, *j*=1... J, de sorte qu'à des angles de diffraction compris entre 0° et +30°, l'observateur voit une image filaire 3D, et à des angles de diffraction compris entre 0° et -30°, l'observateur voit une autre image filaire 3D, et les deux images sont constituées d'arêtes sombres sur fond clair.

4. Procédé mis en œuvre par ordinateur pour la synthèse d'un système micro-optique selon l'une quelconque des revendications 1 à 3, dans lequel chacune des régions où la fonction de phase satisfait Φ *(x,y)* = 0 est partiellement ou entièrement remplie de réseaux de diffraction ayant des périodes diverses et des orientations différentes, lesquels, lorsque le système micro-optique est éclairé par une source de lumière blanche, forment une image couleur 2D vue par l'observateur à des angles de diffraction supérieurs à 60°.

Fig. 1

Fig. 2

$G_{ij}$

$(x_i, y_j)$

Fig. 3

$\varphi^+(0,y)$

$y$

(a)

$\varphi^-(0,y)$

$y$

(b)

Fig. 4

$\varphi_{ij}(x,y)$

$G_{ij}$

Fig. 5

$f_{ij}$

Fig. 6

Fig. 7

Fig. 8

Fig. 9

$\overline{G}_{ij}$

Fig. 10

$\overline{G}_{ij}$

Fig. 11

Fig. 12

Fig. 13

$G_{ij}$ — $G_{ij}^{(1)}$

$G_{ij}^{(2)}$

Fig. 14

$G_{ij}^{(1)}$

$G_{ij}^{(2)}$

(a)　　(b)

- $f_{ij}^{(1)} = f_{ij}^{(2)}$

Fig. 15

$G_{ij}^{(1)}$

$G_{ij}^{(2)}$

(a)　　(b)

- $f_{ij}^{(2)}$
- $f_{ij}^{(1)}$

Fig. 16

Fig. 17

Fig. 18

Fig. 19

$G_{ij}$

Fig. 20

Fig. 21

Fig. 22

Fig. 23

Fig. 24

Fig. 25

Fig. 26

Fig. 27

Fig. 28

$$G_{ij}^{2D} \left\{ \quad G_{ij}^{3D} \right.$$

Fig. 29

Fig. 30

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EA 034156 B1

- US 20070268536 A1

**Non-patent literature cited in the description**

- **RUDOLF L.** Optical Document Security. Van Renesse. Artech House, 2005